# EUROPÄISCHE PATENTSCHRIFT

(11) **EP 1 264 125 B1**
(45) Veröffentlichungstag und Bekanntmachung des Hinweises auf die Patenterteilung: **19.11.2003**
(21) Anmeldenummer: 01931479.8
(22) Anmeldetag: 22.02.2001
(51) Int. Cl.: F16H 57/08, F16H 48/08

(54) **AUSGLEICHSGETRIEBE MIT ANLAUFSCHEIBEN**
DIFFERENTIAL COMPRISING THRUST WASHERS
DIFFERENTIEL DOTE DE PLAQUES DE BUTEE

(30) Priorität: 02.03.2000 DE 10009961
(43) Veröffentlichungstag der Anmeldung: 11.12.2002
(73) Patentinhaber: Volkswagen Aktiengesellschaft, 38436 Wolfsburg (DE)
(72) Erfinder: GRUSS, Roland, 38477 Jembke (DE); ROGGE, Andreas, 38100 Braunschweig (DE); SENDZIK, Klaus, 38104 Braunschweig (DE)
(86) Internationale Anmeldenummer: EP0102019
(87) Internationale Veröffentlichungsnummer: WO01065149

(56) Entgegenhaltungen:
- DE-A- 19 730 004
- DE-B- 2 453 964
- US-A- 4 084 450
- US-A- 4 163 400
- US-A- 5 233 757

## Beschreibung

Die Erfindung betrifft ein Ausgleichsgetriebe mit Anlaufscheiben gemäß dem Oberbegriff des Patentanspruchs 1.

Ausgleichsgetriebe ermöglichen Kraftfahrzeugen das Befahren von Kurven und ungleichmäßigen Fahrbahnoberflächen unter Vermeidung von Verspannungen des Antriebsstranges. Dabei gleicht ein Ausgleichsgetriebe bei einer Verwendung als Achsdifferential unterschiedliche Drehzahlen der beiden Räder einer angetriebenen Achse und bei einer Verwendung als Zentraldifferential unterschiedliche mittlere Drehzahlen von zwei angetriebenen Achsen aus. Als Bauarten von Ausgleichsgetrieben sind das Kegelrad-, das Stirnrad- und das Schneckenradausgleichsgetriebe bekannt, wobei das Kegelradausgleichsgetriebe in Kraftfahrzeugen am häufigsten zur Anwendung kommt. Aufgrund steigender Antriebsdrehmomente erfahren die Ausgleichsgetriebe eine zunehmende Leistungsverdichtung bei weitgehend konstantem Bauvolumen. Daraus resultiert eine erhöhte Beanspruchung einzelner Bauteile des Ausgleichsgetriebes.

Ein Kegelradausgleichsgetriebe besteht im wesentlichen aus einem Antriebsrad, einem mit diesem fest verbundenen Ausgleichsgehäuse, zwei in dem Ausgleichsgehäuse drehbar gelagerten und mit jeweils einer Abtriebswelle verbundenen Abtriebskegelrädern, und mehreren, zumeist zwei ebenfalls in dem Ausgleichsgehäuse drehbar gelagerten und mit den Abtriebskegelrädern in Eingriff befindlichen Ausgleichskegelrädern. Es ist bekannt, auf den Abtriebswellen und auf entsprechenden Lagerachsen der Ausgleichskegelräder Anlaufscheiben zwischen den Kegelrädern und einer Innenwand des Ausgleichsgehäuses anzuordnen, um ein Anlaufen der Kegelräder an das Ausgleichsgehäuse und einen damit verbundenen Verschleiß zu vermeiden. Die Anlaufscheiben sollen möglichst gegenüber dem Ausgleichsgehäuse feststehen, so dass eine Relativbewegung jeweils nur zwischen dem betreffenden Kegelrad und einer als Reibfläche vorgesehenen Innenfläche der zugeordneten Anlaufscheibe auftritt.

Aus der DE 196 37 120 C1 ist ein Differentialgetriebe mit Anlaufscheiben bekannt, die einen gewölbten ringförmigen Grundkörper mit radial angeordneten federnden Fortsätzen aufweisen. Die federnden Fortsätze dienen hauptsächlich zur Erzeugung einer axialen Vorspannung zur Reduzierung des Zahnflankenspiels der miteinander in Eingriff befindlichen Kegelräder, so dass Lastwechselgeräusche vermieden werden. Durch die radial nach außen gerichteten und sich an der Innenwand des Ausgleichsgehäuses abstützenden federnden Fortsätze ist aber auch eine reibschlüssig wirksame Verdrehsicherung gegeben. Je nach auftretender Belastung kann die Anpresskraft der federnden Fortsätze, insbesondere nach einem verschleiß- und alterungsbedingten Nachlassen der Federkräfte, jedoch nicht mehr ausreichen, um ein Mitdrehen der jeweiligen Anlaufscheibe zu verhindern. Dies führt dann zu einem unerwünschten Verschleiß an den Anlaufscheiben, speziell an den Enden der federnden Fortsätze, und an der Innenwand des Ausgleichsgehäuses.

Aus dem gattungsgemäßen Dokument DE 24 54 067 A1 ist bekannt, mehrere Anlaufscheiben untereinander durch Verbindungsstege zu verbinden und auf diese Weise zu einem Anlaufscheibenverbund zusammenzufassen. Durch eine derartige Verbindung mehrerer Anlaufscheiben zu einem Anlaufscheibenverbund, der bevorzugt aus einem verschleißfesten Kunststoff, wie beispielsweise faserhaltigem Polyamid, besteht, wird die Montage des betreffenden Ausgleichsgetriebes wesentlich erleichtert und ein Mitdrehen der Anlaufscheiben durch deren Verbindung mittels der Verbindungsstege weitgehend verhindert. Nachteilig ist jedoch, dass es bei einem Auftreten größerer Reibmomente zwischen den Kegelrädern und den Anlaufscheiben dennoch zu einer begrenzten Verdrehung zumindest einer einzelnen Anlaufscheibe kommen kann, die eine Verwölbung des Anlaufscheibenverbundes, zumeist im Bereich der benachbarten Verbindungsstege führt. In den verwölbten Bereichen kann es zu Rissbildung und zu Reibkontakt mit rotierenden Bauteilen kommen, was letztlich zur Zerstörung des Anlaufscheibenverbundes führt.

Dies trifft ebenso für einen in der DE 197 30 004 A1 offenbarten Anlaufscheibenverbund zu, der zur Vermeidung von mechanischer und thermischer Überlastung im Betrieb an mindestens einer Anlaufscheibe an der dem jeweiligen Kegelrad zugewandten Innenseite Vertiefungen und / oder Aussparungen aufweist. Die Vertiefungen bzw. Aussparungen dienen der Verbesserung des Ölflusses. Das in dem Ausgleichgehäuse befindliche Öl dient hierbei als Schmier- und Kühlmittel. Da es jedoch aufgrund der Aussparungen auch leichter zwischen die Anlaufscheiben und Verbindungsstege einerseits und die Innenwand des Ausgleichsgehäuses andererseits gelangen kann, wird die Reibung zwischen dem Anlaufscheibenverbund und der Innenwand des Ausgleichsgehäuses verringert, was die Gefahr einer Verdrehung von Anlaufscheiben und einer Verwölbung des Anlaufscheibenverbundes erhöht.

Im Stand der Technik ist ein Ausgleichsgetriebe mit Anlaufscheiben bekannt (DE-A-24 53 964) bei dem die Anlaufscheiben formschlüssig gegen Verdrehen gesichert sind, wobei die Anlaufscheiben Durchbrüche aufweisen, die zumindest teilweise einen nach außen gebogenen Rand aufweisen, der mit dem Ausgleichsgehäuse in Eingriff steht.

Es sind auch im Stand der Technik noch weitere Ausgleichsgetriebe bekannt (US-PS 4,084,450 und US-PS 4,163,400), bei denen das Prinzip der Verdrehsicherung dahin geht, daß hier als Verdrehsicherung eine stiftförmige Verbindung zwischen Ausgleichsgehäuse und Anlaufscheiben realisiert ist bzw. die formschlüssige Verdrehsicherung dadurch erfolgt, daß die Anlaufscheiben als Ganzes in eine Vertiefung der Innenwand des Ausgleichsgehäuses eingepaßt sind.

Die bisher im Stand der Technik bekannten Problemlösungen sind unter Berücksichtigung des Arbeitsaufwandes, der damit verbundenen Kosten sowie der realisierten konstruktiven Möglichkeiten noch nicht optimal.

Es ergibt sich daher das Problem, ein mit einem Ausgleichsgehäuse, mehreren Ausgleichsrädern und zwei Abtriebswellenrädern versehenes Ausgleichsgetriebe mit derart verbesserten Anlaufscheiben bzw. einem entsprechenden Anlaufscheibenverbund auszustatten, dass ein Mitdrehen der Anlaufscheiben und ggf. eine daraus bedingte Verwölbung des Anlaufscheibenverbundes mit einfachen und kostengünstigen Mitteln vermieden wird.

Das Problem wird erfindungsgemäß in Verbindung mit dem Oberbegriff des Anspruches 1 durch die Merkmale des Kennzeichnungsteiles des Patentanspruchs 1 gelöst.

Vorteilhafte Ausgestaltungen der Erfindung sind in den Ansprüchen 2 bis 10 angegeben.

Durch die Verwendung einer formschlüssigen Verdrehsicherung an der Anlaufscheibe selbst wird die unerwünschte Verdrehung unmittelbar am Ort ihrer Entstehung abgefangen und somit verhindert. Die Verdrehsicherung ist sowohl bei Verwendung einzelner Anlaufscheiben als auch bei Verwendung eines Anlaufscheibenverbundes anwendbar. Im zweiten Fall erfolgt keine Weiterleitung des betreffenden Drehmomentes in die benachbarten Verbindungsstege mehr. Insofern kann es auch zu keiner Verwölbung des Anlaufscheibenverbundes, speziell im Bereich der Verbindungsstege, mehr kommen. Die Verbindungsstege dienen nur noch zur Fixierung der Anlaufscheiben für die Montage; sie können daher schmaler, dünner und flexibler als bislang üblich ausgebildet werden. Die Verdrehsicherung ist im Falle der Verwendung eines Anlaufscheibenverbundes unabhängig davon anwendbar, ob der Anlaufscheibenverbund aus einem einheitlichen Material besteht, oder ob für die Anlaufscheiben und die Verbindungsstege unterschiedliche Materialien verwendet werden. Darüber hinaus ist eine Anwendung sowohl bei Verwendung eines kugelkalottenförmigen Ausgleichsgehäuses als auch bei einem kastenförmigen Ausgleichsgehäuse möglich.

Eine formschlüssige Verdrehsicherung kann zwar prinzipiell auch als eine Vertiefung in einer der Innenwand des Ausgleichsgehäuses zugewandten Außenseite der Anlaufscheibe und als eine mit dieser in Eingriff bringbar erhabene Kontur an der betreffenden Innenwand ausgebildet sein. Dies hätte jedoch eine Schwächung der Anlaufscheibe und eine aufwendige Bearbeitung der Innenwand des Ausgleichsgehäuses zur Folge. Daher ist die Verdrehsicherung als eine Vertiefung in einer Innenwand des Ausgleichsgehäuses und als eine mit dieser in Eingriff bringbare erhabene Kontur an einer Außenfläche der Anlaufscheibe ausgebildet.

Die Vertiefung kann jeweils als Bohrung und die zugeordnete erhabene Kontur als Noppe ausgebildet sein, wobei die Bohrung wahlweise als Sackloch oder als Durchgangsloch ausgebildet sein kann. Bei einer Verwendung von Durchgangslöchern können diese vorteilhaft von außen gebohrt werden. Durch die Anzahl der Bohrungen und Noppen, die im Bereich einer Anlaufscheibe in der Innenwand des Ausgleichsgehäuses bzw. der Außenseite der Anlaufscheibe angeordnet werden können, ist eine Anpassung an die auftretende Belastung, d.h. an das größte im Betrieb auftretende und durch die erfindungsgemäße Verdrehsicherung abzufangende Reibmoment möglich.

Da eine exakte Anordnung der Bohrungen relativ aufwendig ist, kann die Vertiefung auch als Nut ausgebildet sein, wobei die zugeordnete erhabene Kontur entweder aus mehreren in Linie angeordneten Noppen bestehen oder als Steg ausgebildet sein kann.

Zur optimalen Aufnahme des abzufangenden Reibmomentes ist die jeweilige Nut bezogen auf eine Drehachse des zugeordneten Triebrades vorteilhaft im wesentlichen radial angeordnet, da dadurch der größtmögliche Widerstand gegen eine Verdrehung der betreffenden Anlaufscheibe gegeben ist.

Bei Verwendung eines kugelkalottenförmigen Ausgleichsgehäuses ist es aus fertigungstechnischer Sicht besonders vorteilhaft, wenn die Noppen bzw. Stege derart auf den Anlaufscheiben angeordnet sind, dass die Radialnut in der Innenwand des Ausgleichsgehäuses als geschlossen umlaufende Ringnut ausgebildet werden kann. In diesem Fall ist nur ein einziger Bearbeitungsschritt mit einer einmaligen Ausrichtung der Fräsvorrichtung zur Herstellung der Ringnut erforderlich. Bei einer Verwendung von zwei Ausgleichskegelrädern ist bei entsprechender Auslegung nur eine einzige Ringnut erforderlich, welche vorteilhaft derart angeordnet ist, dass sie die Drehachsen mehrerer Triebräder mittig schneidet.

Zur Aufnahme größerer Reibmomente können auch mehrere sich kreuzende Ringnuten vorgesehen sein, von denen mindestens eine Ringnut die Drehachsen mehrerer Triebräder mittig schneiden sollte.

Alternativ dazu ist auch die Verwendung mehrerer parallel zueinander angeordneter Ringnuten denkbar, von denen eine Ringnut, bevorzugt die mittlere, die Drehachsen mehrerer Triebräder mittig schneidet. In diesem Fall braucht das Ausgleichgehäuse zur Herstellung oder Bearbeitung der Ringnuten nur einmal ausgerichtet und eingespannt zu werden.

Zur Vermeidung von Passungsproblemen bei der Montage ist es allgemein von Vorteil, wenn die jeweilige Vertiefung und / oder die erhabene Kontur eine Verrundung und / oder eine Phase aufweist.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: Eine Draufsicht eines Anlaufscheibenverbundes in der Ebene I - I von Fig. 3 geschnitten,
- Figur 2:: eine Seitenansicht des Anlaufscheibenverbundes von Fig. 1 aus Richtung II,
- Figur 3:: eine Seitenansicht des Anlaufscheibenverbundes von Fig. 1 aus Richtung III,
- Figur 4:: einen Querschnitt eines Ausgleichsgehäuses mit einer Ringnut entlang der Ebene IV- IV von Fig. 7,
- Figur 5:: einen Querschnitt eines Ausgleichsgehäuses mit drei parallel angeordneten Ringnuten in einem Fig.4 entsprechenden Querschnitt,
- Figur 6:: einen vergrößerten Ausschnitt eines Querschnittes durch einen Steg und eine zugeordnete Nut, und
- Figur 7:: ein Ausgleichsgetriebe mit einem Anlaufscheibenverbund nach den Figuren 1 bis 3 und einem Ausgleichsgehäuse nach Fig. 4.

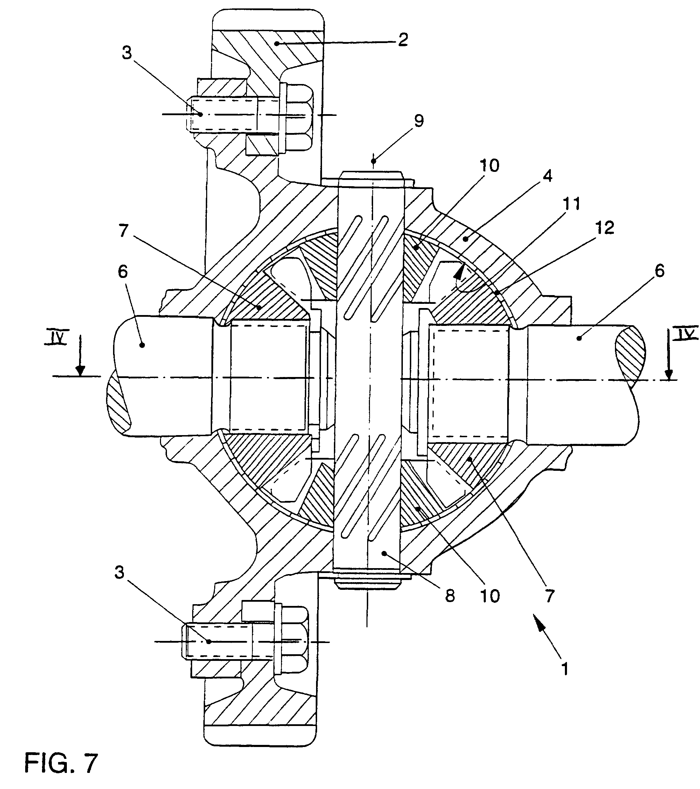

In der Figur 7 ist als Übersicht ein als Kegelradausgleichsgetriebe ausgebildetes Ausgleichsgetriebe 1 abgebildet. Das Ausgleichsgetriebe 1 besteht im wesentlichen aus einem Antriebsrad 2, einem mit diesem über Schrauben 3 fest verbundenen Ausgleichsgehäuse 4, zwei in dem Ausgleichsgehäuse 4 um Drehachsen 5 drehbar gelagerten und mit jeweils einer Abtriebswelle 6 verbundenen Abtriebswellenkegelrädem 7, und zwei ebenfalls in dem Ausgleichsgehäuse 4 auf einer gemeinsamen Ausgleichsachse 8 um eine Drehachse 9 drehbar gelagerten und mit den Abtriebswellenkegelrädem 7 in Eingriff befindlichen Ausgleichskegelrädern 10. Zwischen der kugelförmig ausgebildeten Innenwand 11 des Ausgleichsgehäuses 4 einerseits und den Ausgleichs- und Abtriebswellenkegelrädern 10, 7 andererseits ist ein Anlaufscheibenverbund 12 angeordnet.

Bei einer Verwendung des Ausgleichsgetriebes 1 als Achsdifferential eines Kraftfahrzeuges wird ein von einem Antriebsmotor erzeugtes und von einem nachgeschalteten Getriebe entsprechend dem dort eingestellten Übersetzungsverhältnis gewandeltes Drehmoment über ein Abtriebsritzel in das Antriebsrad 2 eingeleitet. Fährt das Kraftfahrzeug auf einer ebenen Fahrbahn geradeaus, so wird das wirksame Drehmoment über das Ausgleichsgehäuse 4, die Ausgleichsachse 8, die Ausgleichskegelräder 10, und die Abtriebswellenkegelräder 7 in die Abtriebswellen 6 eingeleitet und von diesen an die zugeordneten Antriebsräder übertragen. In diesem Fall drehen sich beide Abtriebswellen 6 mit gleicher Drehzahl, d.h. die Ausgleichskegelräder 10 stehen gegenüber dem Ausgleichsgehäuse 4 still und sind als Mitnehmer wirksam. Befährt das Kraftfahrzeug dagegen eine Kurve, werden die unterschiedlichen Drehzahlen zwischen dem inneren und dem äußeren Antriebsrad bzw. der jeweils zugeordneten Abtriebswelle 6 dadurch ausgeglichen, dass die Abtriebswellenkegelräder 7 gegenüber dem Ausgleichsgehäuse 4 gegensinnig über die Ausgleichskegelräder 10 abrollen. Infolgedessen dreht sich die kurvenäußere Abtriebswelle 6 um dieselbe Drehzahldifferenz schneller als das Ausgleichsgehäuse 4 wie sich die kurveninnere Abtriebswelle 6 langsamer dreht. Dabei sorgt der Anlaufscheibenverbund 12 dafür, dass die Ausgleichs- und Abtriebswellenkegelräder 10,7 nicht an der Innenwand 11 des Ausgleichsgehäuses 4 anlaufen und die auftretenden Relativbewegungen verschleißarm aufgenommen werden.

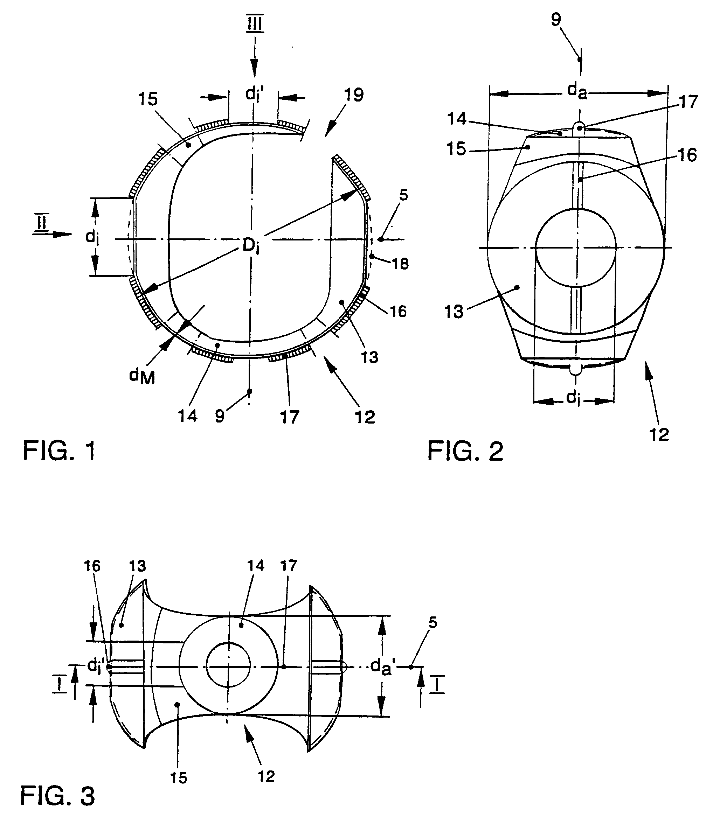

Der Anlaufscheibenverbund 12 ist detailliert in der Figur 1 in einer geschnittenen Draufsicht nach Schnitt I - I, in der Figur 2 in einer Seitenansicht gemäß Blickrichtung II, und in der Figur 3 in einer Seitenansicht gemäß Blickrichtung III dargestellt. Der Anlaufscheibenverbund 12 ist einteilig ausgebildet und weist zwei Anlaufscheiben 13 für die Abtriebswellenkegelräder 7 und zwei Anlaufscheiben 14 für die Ausgleichskegelräder 10 auf, die über Verbindungsstege 15 miteinander verbunden sind. Die Anlaufscheiben 13, 14 sind jeweils mit zwei radial ausgerichteten Stegen 16, 17 versehen, die mittig auf einer gemeinsamen Kreislinie 18 angeordnet sind. Der Anlaufscheibenverbund 12 kann aus einem einheitlichen Material bestehen, z.B. aus einem faserhaltigen Polyamid 6.6. Es ist jedoch auch möglich, dass die Anlaufscheiben 13, 14 und die Verbindungsstege 15 unterschiedliche Materialien aufweisen, bevorzugt die Anlaufscheiben 13, 14 ein verschleißfestes und die Verbindungsstege 15 ein flexibles Material. Entsprechend den Abmessungen der Abtriebswellen 6 und der Abtriebswellenkegelräder 7 weisen die Anlaufscheiben 13 größere Innen- und Außendurchmesser dᵢ, dₐ auf als die Anlaufscheiben 14, deren Innen- und Außendurchmesser dᵢ', dₐ' an die Abmessungen der Ausgleichsachse 8 und der Ausgleichskegelräder 10 angepaßt sind. Aufgrund der kugelförmigen Ausbildung der Innenwand 11 des Ausgleichsgehäuses 4 und einer entsprechenden Gestaltung der Kegelräder 7, 10 sind auch die Verbindungsstege 15 und die Anlaufscheiben 13, 14 kugelförmig bzw. kugelkalottenförmig ausgebildet. Der Anlaufscheibenverbund 12 weist somit einen Innendurchmesser Dᵢ und im wesentlichen eine Materialstärke d_{M} auf. Aufgrund eines nicht vollständig geschlossenen Querschnitts ergibt sich eine Lücke 19.

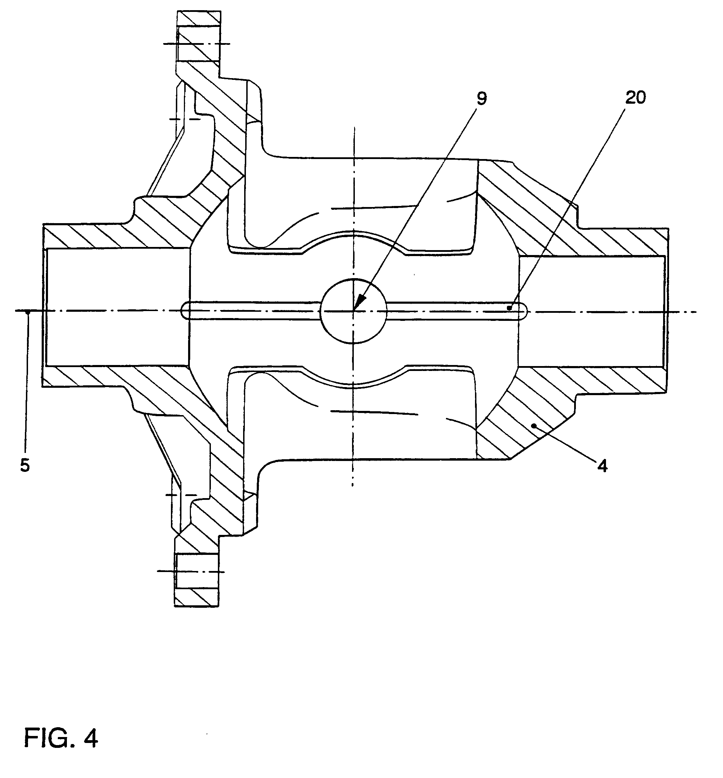

In der Figur 4 ist das Ausgleichsgehäuse 4 nach Fig. 7 in einem Querschnitt entlang der Ebene IV - IV dargestellt. In dieser Darstellung ist eine umlaufende Ringnut 20 erkennbar, die mittig zu den Drehachsen 5, 9 der Abtriebs- und Ausgleichskegelräder 7, 10 angeordnet ist und für den formschlüssigen Eingriff der Stege 16, 17 des Anlaufscheibenverbundes 12 nach den Fig. 1 bis 3 vorgesehen ist.

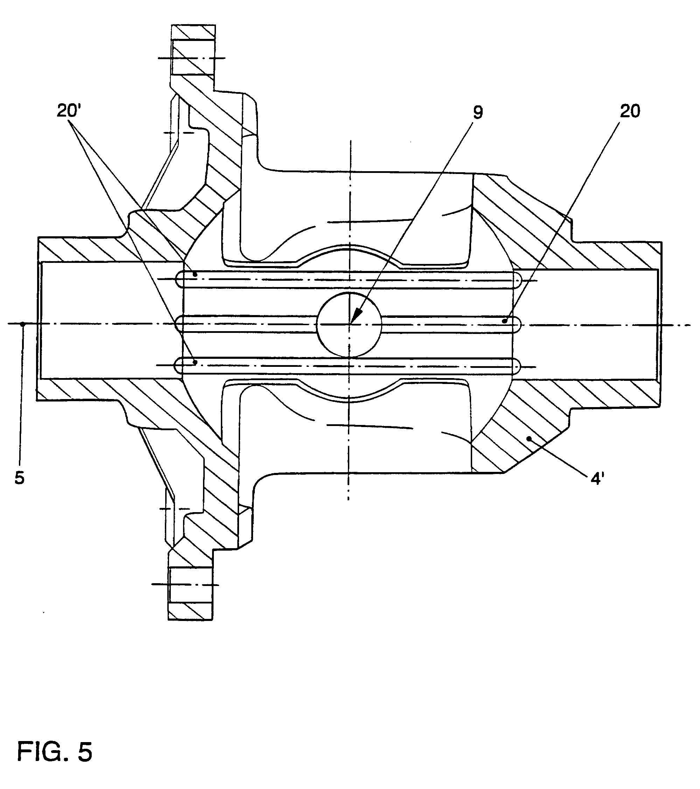

In der Figur 5 ist ein ähnliches Ausgleichsgehäuse 4' abgebildet, das beispielhaft drei parallel angeordnete Ringnuten 20, 20' aufweist, von denen eine, nämlich die mittlere Ringnut 20, mittig zu den Drehachsen 5, 9 der Abtriebs- und Ausgleichskegelräder 7, 10 angeordnet ist. Zwar sind die zur mittleren Ringnut 20 benachbarten Ringnuten 20' zum Abfangen der auf die zugeordneten Anlaufscheiben wirksamen Reibmomente nicht optimal, nämlich radial ausgerichtet. Aber durch die parallele Anordnung ergibt sich eine einfachere und somit kostengünstigere Herstellung bzw. Bearbeitung der Ringnuten 20, 20', da das Ausgleichsgehäuse 4' hierzu nur einmal ausgerichtet und eingespannt zu werden braucht. Alternativ sind jedoch auch mehrere sich kreuzende Ringnuten möglich, von denen mindestens eine die Drehachsen 5, 9 mehrerer Triebräder 7, 10 mittig schneiden sollte.

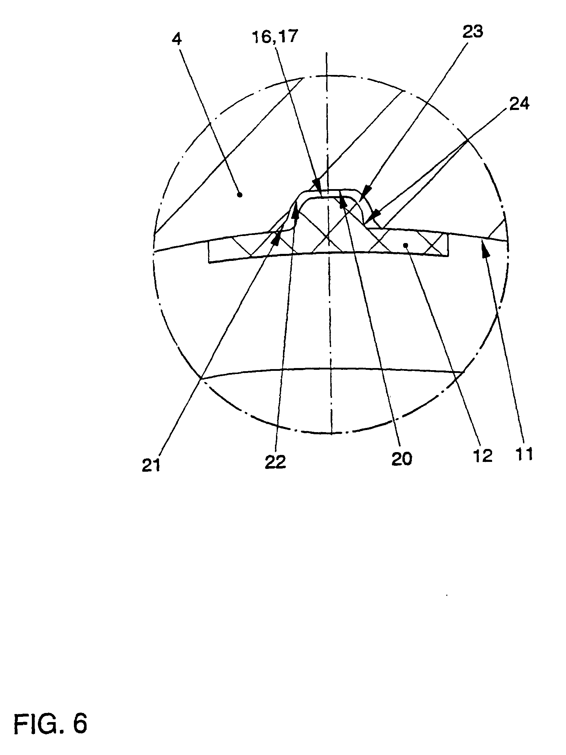

Schließlich ist in der Figur 6 in einem vergrößerten Ausschnitt der Anlaufscheibenverbund 12 und das Ausgleichsgehäuse 4 im Bereich eines in der Ringnut 20 in Eingriff befindlichen Steges 16, 17 in einem vergrößerten Querschnitt abgebildet. Zur Vermeidung von Passungsproblemen bei der Montage, speziell beim Einlegen des Anlaufscheibenverbundes 12 in das Ausgleichsgehäuse 4 ist die an der Innenwand 11 angeordnete Ringnut 20 mit äußeren Phasen 21 und inneren Verrundungen 22 und der Steg 16, 17 mit äußeren und inneren Verrundungen 23, 24 versehen.

Durch die erfindungsgemäße formschlüssige Verdrehsicherung wird eine Weiterleitung der auf die Anlaufscheiben 13, 14 wirksamen Reibmomente in die benachbarten Verbindungsstege 15 zuverlässig verhindert. Daher kann es zu keiner Verwölbung des Anlaufscheibenverbundes 12, speziell im Bereich der Verbindungsstege 15, und einer daraus resultierenden Beschädigung oder Zerstörung des Anlaufscheibenverbundes 12 kommen. Die Verbindungsstege 15 können daher schmaler, dünner und flexibler als bislang üblich ausgebildet werden, was die Montage des Anlaufscheibenverbundes 12 in dem Ausgleichsgehäuse 4 erleichtert. Die Ringnuten 20, 20' und die Stege 16, 17 sind einfach und preiswert herstellbar. Beispielsweise können die Ringnuten 20, 20' im Rohteil des Ausgleichsgehäuses 4, 4' eingegossen oder durch mechanische Nacharbeit, z.B. Fräsen, erzeugt werden. Bei einer Herstellung des Anlaufscheibenverbundes 12 in einem Spritzgussverfahren können die Stege 16, 17 durch entsprechende Nuten in der Gussform mit angespritzt werden.

### BEZUGSZEICHENLISTE

- 1: Ausgleichsgetriebe
- 2: Antriebsrad
- 3: Schraube
- 4, 4': Ausgleichsgehäuse
- 5: Drehachse
- 6: Abtriebswelle
- 7: Abtriebswellenkegelrad
- 8: Ausgleichsachse
- 9: Drehachse
- 10: Ausgleichskegelrad
- 11: Innenwand
- 12: Anlaufscheibenverbund
- 13: Anlaufscheibe
- 14: Anlaufscheibe
- 15: Verbindungssteg
- 16: Steg
- 17: Steg
- 18: Kreislinie
- 19: Lücke
- 20, 20': Ringnut
- 21: (äußere) Phase
- 22: (innere) Verrundung
- 23: (äußere) Verrundung
- 24: (innere) Verrundung
- dₐ: Außendurchmesser
- dₐ': Außendurchmesser
- dᵢ: Innendurchmesser
- dᵢ': Innendurchmesser
- d_{M}: Materialstärke
- Dᵢ: Innendurchmesser

## Patentansprüche

1. Ausgleichsgetriebe mit Anlaufscheiben, insbesondere für ein Kraftfahrzeug, mit einem Ausgleichsgehäuse (4) und mehreren Ausgleichsrädem (10) sowie zwei Abtriebswellenrädern (7) als Triebräder, wobei die Anlaufscheiben (13, 14) jeweils zwischen einem Triebrad (7, 10) und dem Ausgleichsgehäuse (4) angeordnet sind und wobei mindestens eine zwischen einer der Anlaufscheiben (13, 14) und dem Ausgleichsgehäuse (4) formschlüssig wirksame Verdrehsicherung vorgesehen ist, **dadurch gekennzeichnet, daß** die Verdrehsicherung mindestens eine Vertiefung in einer Innenwand (11) des Ausgleichsgehäuses (4) und eine mit dieser in Eingriff bringbare erhabene Kontur an einer Außenfläche der jeweiligen Anlaufscheibe (13, 14) umfasst.

2. Ausgleichsgetriebe nach Anspruch 1, **dadurch gekennzeichnet, dass** mindestens zwei Anlaufscheiben (13, 14) vorhanden sind, die über einen Verbindungssteg (15) verbunden und zu einem Anlaufscheibenverbund (12) zusammengefasst sind.

3. Ausgleichsgetriebe nach Anspruch 1 oder 2, **dadurch gekennzeichnet, dass** die Vertiefung als Bohrung und die erhabene Kontur als Noppe ausgebildet ist.

4. Ausgleichsgetriebe nach Anspruch 1 oder 2, **dadurch gekennzeichnet, dass** die Vertiefung als Nut (20) ausgebildet ist und die erhabene Kontur aus mehreren in Linie angeordneten Noppen besteht.

5. Ausgleichsgetriebe nach Anspruch 1 oder 2, **dadurch gekennzeichnet, dass** die Vertiefung als Nut (20) und die erhabene Kontur als Steg (16, 17) ausgebildet ist.

6. Ausgleichsgetriebe nach Anspruch 4 oder 5, **dadurch gekennzeichnet, dass** die jeweilige Nut (20) bezogen auf eine Drehachse (5, 9) des zugeordneten Triebrades (7, 10) im wesentlichen radial angeordnet ist.

7. Ausgleichsgetriebe nach einem der Ansprüche 4 oder 5, **dadurch gekennzeichnet, dass** bei Verwendung eines kugelkalottenförmigen Ausgleichsgehäuses (4) eine in der Innenwand (11) des Ausgleichsgehäuses (4) geschlossen umlaufende Ringnut (20) vorgesehen ist, wobei die Ringnut (20) die Drehachsen (5, 9) mehrerer Triebräder (7, 10) mittig schneidend angeordnet ist.

8. Ausgleichsgetriebe nach Anspruch 7, **dadurch gekennzeichnet, dass** mehrere sich kreuzende Ringnuten vorgesehen sind, von denen mindestens eine Ringnut (20) die Drehachsen (5, 9) mehrerer Triebräder (7, 10) mittig schneidet.

9. Ausgleichsgetriebe nach Anspruch 7, **dadurch gekennzeichnet, dass** mehrere parallel zueinander angeordnete Ringnuten (20, 20') vorgesehen sind, von denen eine Ringnut (20) die Drehachsen (5, 9) mehrerer Triebräder (7, 10) mittig schneidet.

10. Ausgleichsgetriebe nach einem der Ansprüche 1 bis 9, **dadurch gekennzeichnet, dass** die Vertiefung und / oder die erhabene Kontur eine Verrundung (22, 23, 24) und / oder eine Phase (21) aufweist.

## Claims

1. Differential comprising thrust washers, in particular for a motor vehicle, having a differential housing (4) and a plurality of differential gearwheels (10) as well as two output shaft wheels (7) as drive wheels, the thrust washers (13, 14) each being arranged between a drive wheel (7, 10) and the differential housing (4), and at least one antirotation protection which acts in a positively locking fashion between one of the thrust washers (13, 14) and the differential housing (4) being provided, **characterized in that** the antirotation protection comprises at least one depression in an inner wall (11) of the differential housing (4) and an elevated contour, which can be placed in engagement with the latter, on an outer surface of the respective thrust washer (13, 14).

2. Differential according to Claim 1, **characterized in that** at least two thrust washers (13, 14) are provided, which are connected by means of a connecting web (15) and combine to form a thrust washer grouping (12).

3. Differential according to Claim 1 or 2, **characterized in that** the depression is embodied as a drilled hole, and the elevated contour is embodied as a knob.

4. Differential according to Claim 1 or 2, **characterized in that** the depression is embodied as a groove (20), and the elevated contour is composed of a plurality of knobs arranged in line.

5. Differential according to Claim 1 or 2, **characterized in that** the depression is embodied as a groove (20), and the elevated contour is embodied as a web (16, 17).

6. Differential according to Claim 4 or 5, **characterized in that** the respective groove (20) is arranged essentially radially with respect to an axis of rotation (5, 9) of the associated drive wheel (7, 10).

7. Differential according to one of Claims 4 or 5, **characterized in that**, when a differential housing (4) in the form of a universal ball joint is used, an annular groove (20) which runs around in a closed fashion in the inner wall (11) of the differential housing (4) is provided, the annular groove (20) being arranged in such a way as to intersect the axes of rotation (5, 9) of a plurality of drive wheels (7, 10) centrally.

8. Differential according to Claim 7, **characterized in that** a plurality of intersecting annular grooves are provided, at least one annular groove (20) of which intersects the axes of rotation (5, 9) of a plurality of drive wheels (7, 10) centrally.

9. Differential according to Claim 7, **characterized in that** a plurality of annular grooves (20, 20') which are arranged in parallel with one another are provided, one annular groove (20) of which intersects the axes of rotation (5, 9) of a plurality of drive wheels (7, 10) centrally.

10. Differential according to one of Claims 1 to 9, **characterized in that** the depression and/or the elevated contour have a rounded portion (22, 23, 24) and/or a chamfer (21).

## Revendications

1. Différentiel avec plaques de butée, en particulier pour un véhicule automobile, avec un carter de différentiel (4) et plusieurs pignons de différentiel (10) ainsi que deux pignons d'arbre récepteur (7) en tant que pignons moteurs, les plaques de butée (13, 14) étant respectivement agencées entre un pignon moteur (7, 10) et le carter de différentiel (4), au moins un dispositif de sécurité antitorsion efficace par engagement positif étant prévu entre l'une des plaques de butée (13, 14) et le carter de différentiel (4), **caractérisé en ce que** le dispositif de sécurité antitorsion comprend au moins un enfoncement dans une paroi interne (11) du carter de différentiel (4) et un contour surélevé pouvant être amené en prise avec celui-ci, sur une face externe de la plaque de butée (13, 14) respective.

2. Différentiel selon la revendication 1, **caractérisé en ce qu'**il y a au moins deux plaques de butée (13, 14) qui sont raccordées par l'intermédiaire d'une traverse de liaison (15) et assemblées pour former une combinaison de plaques de butée (12).

3. Différentiel selon la revendication 1 ou 2, **caractérisé en ce que** l'enfoncement est réalisé sous forme de trou et le contour surélevé sous forme de bosse.

4. Différentiel selon la revendication 1 ou 2, **caractérisé en ce que** l'enfoncement est réalisé sous forme de rainure (20) et que le contour surélevé est constitué de plusieurs bosses disposées en ligne.

5. Différentiel selon la revendication 1 ou 2, **caractérisé en ce que** l'enfoncement est réalisé sous forme de rainure (20), et le contour surélevé sous forme de nervure (16, 17).

6. Différentiel selon la revendication 4 ou 5, **caractérisé en ce que** la rainure (20) respective est agencée de manière sensiblement radiale par rapport à un axe de rotation (5, 9) du pignon moteur (7, 10) associé.

7. Différentiel selon l'une des revendications 4 ou 5, **caractérisé en ce qu'**en cas d'utilisation d'un carter de différentiel (4) en forme de calotte sphérique, il est prévu une rainure périphérique annulaire (20) fermée dans la paroi interne (11) du carter de différentiel (4), la rainure annulaire (20) étant agencée de manière à couper en leur centre les axes de rotation (5, 9) de plusieurs pignons moteurs (7, 10).

8. Différentiel selon la revendication 7, **caractérisé en ce qu'**on prévoit plusieurs rainures annulaires se croisant, dont au moins une rainure annulaire (20) coupe les axes de rotation (5, 9) de plusieurs pignons moteurs (7, 10) en leur centre.

9. Différentiel selon la revendication 7, **caractérisé en ce qu'**on prévoit plusieurs rainures annulaires (20, 20') parallèles entre elles, dont une rainure annulaire (20) coupe les axes de rotation (5, 9) de plusieurs pignons moteurs (7, 10) en leur centre.

10. Différentiel selon l'une des revendications 1 à 9, **caractérisé en ce que** l'enfoncement et/ou le contour surélevé présente un arrondi (22, 23, 24) et/ou un chanfrein (21).
